(19) Europäisches Patentamt
European Patent Office
Office européen des brevets

(11) **EP 2 295 948 B1**

(12) **EUROPÄISCHE PATENTSCHRIFT**

(45) Veröffentlichungstag und Bekanntmachung des Hinweises auf die Patenterteilung:
**15.11.2017 Patentblatt 2017/46**

(51) Int Cl.:
***G01M 5/00*** *(2006.01)* ***G01L 5/04*** *(2006.01)*

(21) Anmeldenummer: **10170737.0**

(22) Anmeldetag: **26.07.2010**

(54) **Verfahren und Vorrichtung zur Überwachung von externen Spanngliedern**

Method and device for monitoring external tensioning devices

Procédé et dispositif de surveillance d'éléments tendeurs externes

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **14.09.2009 DE 102009041157**

(43) Veröffentlichungstag der Anmeldung:
**16.03.2011 Patentblatt 2011/11**

(73) Patentinhaber: **Karlsruher Institut für Technologie
76131 Karlsruhe (DE)**

(72) Erfinder:
• **Stempniewski, Lothar
76275 Ettlingen (DE)**

• **Siegel, Steffen
76227 Karlsruhe (DE)**

(74) Vertreter: **Ege Lee & Partner
Patentanwälte PartGmbB
Walter-Gropius-Straße 15
80807 München (DE)**

(56) Entgegenhaltungen:
**DE-A1- 4 408 043 DE-A1- 19 531 858
FR-A1- 2 138 268 KR-B1- 100 373 517
US-A1- 2004 073 408 US-A1- 2004 123 665**

EP 2 295 948 B1

**Beschreibung**

Die Erfindung betrifft ein Verfahren und eine Vorrichtung zur Überwachung von ummantelten, außerhalb eines Betonquerschnitts einer Spannbetonbrücke angeordneten Spannelementen durch Erfassen einer auf eine Anregung des Spannelements folgenden Eigenfrequenz mittels eines zwischen zwei Abstützbereichen des Spannelements der Spannbetonbrücke angeordneten Schwingungsaufnehmers und Ermitteln der Eigenfrequenz mittels einer FFT-Analyse.

Spannbetonbrücken mit außerhalb des Betonquerschnitts angeordneten, auswechselbaren Spanngliedern in Form von externen Spanngliedern sind beispielsweise aus der DE 41 18 897 A1 bekannt. Bei externen Spanngliedern werden zu einem Bündel zusammengefasste Drähte oder Litzen beispielsweise mit einem Polyethylen-Mantel ummantelt und die Zwischenräume mit Fett, Wachs oder dergleichen befüllt. Die externen Spannglieder werden an einem Festanker der Spannbetonbrücke aufgenommen und gegebenenfalls über einen oder mehrere Umlenksättel vorzugsweise schräg zur Fahrbahnebene in einem längs der Fahrbahn verlaufenden Hohlkasten zu einem Spannanker geführt und dort verspannt.

Weiterhin sind Spannbetonbrücken mit als Schrägseile ausgebildeten Spannelementen beispielsweise aus der DE 20 2005 017 463 U1 bekannt, die zwischen einem Pylon und der Fahrbahn verspannt sind. Derartige Spannglieder sind aus Bündeln von Litzen oder Drähten gebildet, wobei diese einzeln und/oder als Bündel gegen Korrosionseinflüsse ummantelt sind.

Um derartige Spannelemente auf Schädigungszustände, beispielsweise Korrosion, Risse, Ermüdungsbrüche und dergleichen zu untersuchen, werden neben einer aufwendigen, schlecht dokumentierbaren und nicht objektivierbaren Begutachtung durch Wartungspersonal zerstörungsfreie Prüfmethoden vorgeschlagen.

Schädigungszustände in ankernahen Bereichen einer Verankerung beziehungsweise Umlenksätteln eines Spannelements in einer Betonverankerung können beispielsweise mittels des Ultraschallechoverfahrens erfasst werden. Allerdings müssen hierzu die Spannglieder mit hohem Aufwand vorbereitet, beispielsweise entfettet werden. Weiterhin eignet sich dieses Verfahren nicht für von der Verankerung entfernte Bereiche des Spannelements. Im Gegensatz hierzu liefert ein magnetinduktives Verfahren lediglich Schädigungen der Spannelemente zwischen zwei Anker- beziehungsweise Abspannbereichen. Im Bereich von Anker- oder Umlenkstellen kann dieses Verfahren nicht eingesetzt werden. Das Verfahren einer dynamischen Schwingungsmessung eines Spannelements erfordert unter Zugrundelegung einer Schwingungsgleichung einer Saite die Kenntnis der freien Länge (=Saitenlänge) und der Masse des Spannelements. Infolge der Ummantelung, Befettung und anderer Einflussgrößen ist die tatsächliche Masse des Spannelements nur schwer zugänglich. Weiterhin sind Anker- und Umlenkstellen infolge deren Umlenk- und Führungseigenschaften auf Längebereiche erstreckt, die eine eindeutige Zuordnung der freien Länge des Spannglieds nicht zulassen.

Aus der DE 44 08 043 A1 ist eine Vorrichtung zum Überwachen der Spannkraft eines Spannelements zur Vorspannung eines Bauwerks bekannt, bei dem die Vorspannung des Spannelements mittels eines an einem Außenmantel einer Ankerbüchse des Spannelements angeordneten Dehnmessstreifens vorgesehen ist. Hierbei wird von einer Änderung der Spannung der Ankerbüchse bei sich ändernder Vorspannung ausgegangen.

Im Weiteren ist aus der DE 101 02 577 C1 ein Verfahren zur Zustandserkennung von elektrisch leitfähigen, länglichen, in Beton eingebetteten Spanngliedern mittels Einkoppelung eines elektromagnetischen Messsignals bekannt.

Aus der DE 195 31 858 A1 ist ein Messverfahren für Abspannseile von Antennen oder Masten bekannt. Hierbei werden die zwischen der Antenne und der Erde gespannten Seile mit einem Schwingungserreger angeregt und die resultierenden akustischen Wellen mittels eines FFT-Analysators ausgewertet. Die KR 100373517 B1 sieht zur Schwingungserregung natürliche Frequenzanregung an einer Schrägseilbrücke vor.

Es ergibt sich daher die Aufgabe, für externe Spannelemente einer Spannbetonbrücke ein Verfahren und eine Vorrichtung vorzuschlagen, mit der die Spannelemente in einfacher Weise insbesondere bezüglich ihrer Ummantelung zerstörungsfrei und ohne geschultes Personal auf Schädigungszustände untersucht werden können. Bevorzugt soll eine derartige Untersuchung automatisiert erfolgen können.

Die Aufgabe wird durch die Merkmale des Verfahrens nach Anspruch 1 und den Gegenstand des Anspruchs 8 gelöst. Die von dem Anspruch 1 abhängigen Ansprüche geben vorteilhafte Ausführungsformen des Verfahrens nach Anspruch 1 wieder.

In dem vorgeschlagenen Verfahren zur Überwachung von ummantelten, außerhalb eines Betonquerschnitts einer Spannbetonbrücke angeordneten Spannelementen werden eine auf eine Anregung des Spannelements folgende Eigenfrequenz mittels eines zwischen zwei Abstützbereichen des Spannelements angeordneten Schwingungsaufnehmers, der beispielsweise ein Beschleunigungssensor sein kann, erfasst und die Eigenfrequenz mittels einer FFT-Analyse ermittelt, wobei die Eigenfrequenz als relative Größe ermittelt, auf eine normierte Eigenfrequenz zu einem ersten Zeitpunkt eines einwandfreien Zustands des Spannelements normiert wird und auf einen Schädigungszustand eines Spannelements erkannt wird, wenn ein Vergleich der normierten Eigenfrequenz des ersten Zeitpunktes mit einer zu einem nachfolgenden Zeitpunkt ermittelten Eigenfrequenz ein vorgegebenes Maß überschreitet. Unter Spannelementen sind längs der Fahrbahn zwischen einem Festanker und einem Spannanker und gegebenenfalls über einen oder mehrere Umlenksättel verspannte externe Spannglieder zu verstehen.

Für die Überwachung der Spannelemente auf einen sich gegebenenfalls ankündigenden oder bereits eintretenden Schädigungszustand sind die Erfassung und Bewertung der Vorspannung der Spannelemente und/oder deren Spannabschnitte zwischen den Ankern und - soweit vorhanden - Umlenksätteln von entscheidender Bedeutung. Dabei kann gemäß der nachfolgenden Formel die aktuell vorliegende Vorspannung N infolge der nicht zugänglichen Masse m und die Schwingungslänge des Spannelements nicht absolut und ohne aufwendige, nicht zerstörungsfreie Eingriffe in die Ummantelung erfasst werden. Es hat sich jedoch gemäß dem erfinderischen Gedanken gezeigt, dass ohne Kenntnis der Masse m und der Schwingungslänge L des Spannelements die Vorspannung N aus der Formel

$$ N = \left( \frac{2 \cdot f_k \cdot L}{k} \right)^2 \cdot m $$

mit der ordnungsabhängigen Eigenfrequenz $f_k$ und der Ordnung k der Eigenfrequenz $f_k$ zu einer ausreichenden Beurteilung eines Zustands und damit eines gegebenenfalls eintretenden Schädigungszustands zugänglich ist. Hierbei wird an einen Spannabschnitt des Spannelements zwischen zwei Abstützbereichen, die durch einen Endanker, einen Spannanker oder gegebenenfalls einen Umlenksattel gebildet sein können, ein Schwingungsaufnehmer direkt auf die Ummantelung aufgebracht. Dabei wird das Schwingungsverhalten des entsprechenden Spannabschnitts während eines Anfangszustands beispielsweise im Neuzustand oder einem Zustand zu Beginn der Aufzeichnungen eines neu zu überprüfenden Spannelements in Form einer Fast-Fourier-Transform-Analyse (FFT-Analyse) nach einer Anregung des Spannelements erfasst und in einem Datenspeicher gespeichert. Zeitlich nachfolgende Überprüfungsroutinen werden dabei mit den Ergebnissen der ersten und/oder dieser nachfolgenden und zeitlich vor der aktuellen Überprüfung erfassten und gespeicherten FFT-Analyse verglichen. Die beispielsweise als Eigenfrequenzen oder empirisch in Vorspannungen gewandelten Daten werden dabei mit einem am Anfangszustand normierten Wert verglichen. Weicht dabei der aktuell ermittelte Wert um ein vorgegebenes Maß von dem Normwert am Anfangszustand ab, wird von einem Schädigungszustand ausgegangen und weitere Maßnahmen zur Verifikation und gegebenenfalls der Behebung des Schädigungszustands eingeleitet.

Nach einer vorteilhaften Durchführung des Verfahrens werden die Eigenfrequenzen mehrerer Spannabschnitte eines Spannelements erfasst und ausgewertet. Dabei können für jedes Spannelement einer oder mehrerer Spannbetonbrücken entsprechende Kataloge von dokumentierten Werten aufgezeichnet und auf einem Datenspeicher abgelegt und bei der nächsten Überprüfung zugrunde gelegt werden. Durch die Messung einzelner Spannabschnitte kann die Lage eines Schadens auf einen diskreten Spannabschnitt lokalisiert werden. Weiterhin ist insbesondere bei einer hohen Reibung infolge auftretender Querbelastungen der Litzen oder Drähte in der Ummantelung beispielsweise an einem Umlenksattel eines externen Spannglieds eine Änderung der Vorspannung an einem vorgegebenen Spannabschnitt nicht zweifelsfrei in den anliegenden Spannabschnitten erkennbar. Bei nicht durch eine derartige Reibung gestörter Fortpflanzung der Vorspannung über mehrere Spannabschnitte kann eine besonders einfache Überprüfung eines externen Spannglieds durch Untersuchung lediglich eines oder weniger Spannabschnitte vorgeschlagen werden.

In vorteilhafter Weise wird aus mehreren zeitlich aufeinanderfolgenden Normwerten eine Historie eines diskreten Spannelements oder Spannabschnitts erfasst. Dabei hat sich gezeigt, dass über die Zeit die Vorspannung von Spannelementen ohne Schädigung bereits infolge Kriechen und Schwinden insbesondere des Betons der Betonspannbrücke und deren Abstützteilen wie Endankern, Spannankern und Umlenksätteln, Relaxation des die Spannelemente bildenden Spannstahls und dergleichen abnimmt. Aus der Aufnahme einer Historie von Werten kann eine besonders sichere Beurteilung eines Schädigungszustandes bei gleichzeitig reduzierter Fehleinschätzung erfolgen, wenn eine zeitliche Entwicklung eines Normwerts mit empirisch oder modellgestützt ermittelten Werten verglichen wird und ein Schädigungszustand abhängig von einer Abweichung von diesen Werten ermittelt wird. Hierbei kann beispielsweise eine über die Zeit variierende Hüllkurve beispielsweise mit abnehmender Vorspannung beziehungsweise Eigenfrequenz als vorgegebenes Maß einer einwandfreien Funktion eines Spannelements vorgegeben werden, bei der auf einen Schädigungszustand erkannt wird, wenn bei einer aktuellen Untersuchung eines Spannelements oder einer oder mehrerer Spannabschnitte der ermittelte Wert der Eigenfrequenz oder einer aus dieser abgeleiteten Größe die Hüllkurve verlässt.

Insbesondere bei externen Spanngliedern mit geringer Reibung an den Umlenksätteln und daher guter Übertragung der Vorspannung über den oder die Umlenksättel hinweg kann vorteilhaft sein, wenn auf einen Schädigungszustand erkannt wird, wenn die Normwerte mehrere Spannabschnitte eines Spannelements ein vorgegebenes Maß überschreiten, das heißt, die Eigenfrequenz beziehungsweise die Vorspannung des entsprechenden Spannglieds um einen vorgegebenen Betrag abgefallen ist. Weiterhin kann die Bewertung der Entwicklung der Eigenfrequenzen einzelner externer Spannglieder abhängig von einem Vergleich mit symmetrisch im Hohlkasten angeordneten Spannelementen erfolgen.

Die Anregung des Spannelements kann in bekannter Weise mittels einer Übertragung von kinetischer Energie auf das Spannelement beispielsweise mittels eines Hammers erfolgen. Eine Messung der Eigenfrequenz erfolgt unmittelbar danach mittels eines angelegten Schwingungsaufnehmers. Die ermittelten Messwerte können in einer mit dem Schwingungsaufnehmer mittels eines Verbindungskabels oder drahtlos in Verbindung stehenden mobilen Datenverarbeitungsanlage erfasst, gespeichert und gegebenenfalls ausgewertet werden. Die Identifizierung einzelner Spannelemente beziehungsweise deren Spannabschnitte kann mittels eines Barcode-Lesers oder vergleichbaren Einrichtungen erfolgen. Die gewonnenen Daten können zur Dokumentation, Auswertung, Archivierung und dergleichen auf einen Zentralrechner übertragen werden. Auf diese Weise kann ein Überwachungssystem vorgesehen werden, das von ungeschultem Personal während einer Brückeninspektion bedient werden kann.

Gemäß einer besonders vorteilhaften Durchführung des Verfahrens kann auf eine selbst initiierte Anregung vollständig verzichtet werden. Es hat sich gezeigt, dass der über die Spannbetonbrücke fließende Transferverkehr, insbesondere Lastverkehr eine Anregung der Spannelemente soweit verursacht, dass diese für eine Erfassung und Auswertung der beschriebenen Eigenfrequenz ausreichend ist. Eine Untersuchung einer Spannbetonbrücke kann daher bei fließendem Verkehr völlig ohne eigens eingeleitete Anregung erfolgen, wodurch der Untersuchungsvorgang weiter vereinfacht wird. Ist die Anregung durch den Verkehr nicht ausreichend, kann eine FFT-Analyse mit einer entsprechenden Warn- oder Fehlermeldung abgebrochen werden.

In besonders vorteilhafter Weise ist eine Anregung mittels des Transferverkehrs für eine automatisierte Überwachung von Spannbetonbrücken auf Schädigungszustände vorteilhaft. Hierzu können beispielsweise einzelne oder alle Spannabschnitte einzelner oder aller Spannelemente mit Schwingungsaufnehmern versehen sein, die drahtgebunden oder drahtlos während eines vorhandenen Verkehrsflusses in vorgegebenen Zeitabständen Messsignale der Eigenfrequenz oder in einer Vorortelektronik bereits zu einem normierten Übertragungsprotokoll gewandelten Daten auf eine in der oder im Bereich der Spannbetonbrücke untergebrachte Auswerteeinheit übertragen, die die Daten speichert, archiviert und gegebenenfalls bei vorhandener oder drohender Schädigung eines Spannelements eine Warnmeldung ausgibt und/oder auf eine Leitstelle überträgt. Es versteht sich, dass die Speicherung, Archivierung und Bewertung des Brückenstatus auch ausschließlich in der Leitstelle erfolgen kann.

Die Erfindung wird anhand der Figuren 1 bis 3 näher erläutert. Diese zeigen:

Figur 1    ein Spannelement in Form eines externen Spannglieds im Längsschnitt,
Figur 2    ein Blockschaltbild einer Vorrichtung zur Durchführung des Verfahrens zur Überwachung von Spannelementen und
Figur 3    ein Diagramm mit sich über die Zeit entwickelnden Eigenfrequenzen eines externen Spannglieds.

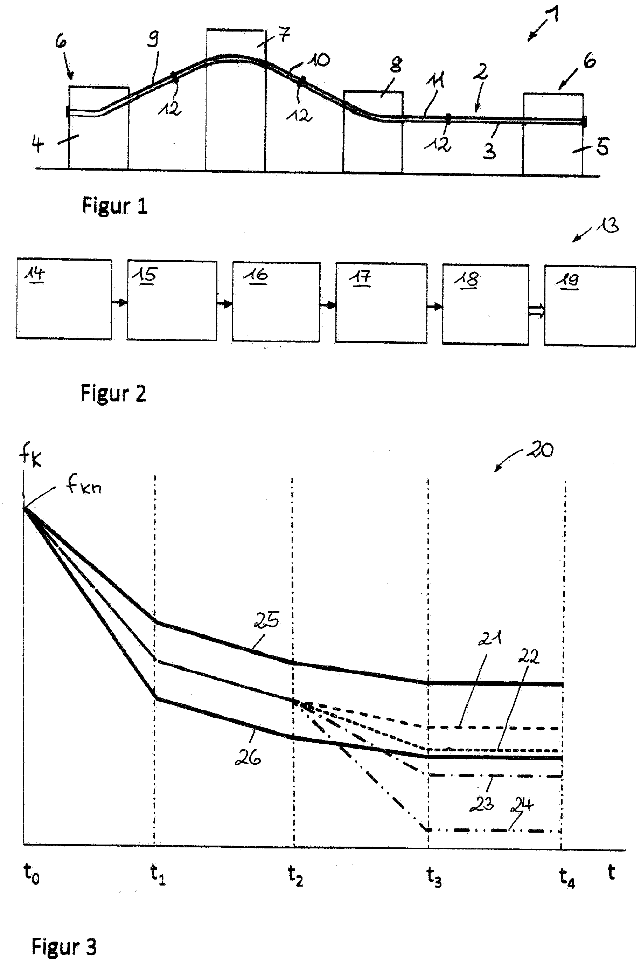

Die Figur 1 zeigt einen schematisch dargestellten teilweisen Längsschnitt durch eine Spannbetonbrücke 1 mit einem von mehreren Spannelementen 2, das in der gezeigten Darstellung als externes Spannglied 3 ausgeführt ist aber auch in weiteren Ausführungsbeispielen als zwischen einem Pylon und dem Brückenkörper verspanntes Schrägseil sein kann.

Das Spannelement 2 besteht aus mehreren zu dem externen Spannglied 3 gebündelten Drähten oder Litzen, die mittels einer Ummantelung beispielsweise aus Polyethylen versehen sind, wobei die Zwischenräume zwischen den Drähten oder Litzen und der Ummantelung mit Füllmaterialen wie Fett, Wachs, Mörtel oder dergleichen ausgefüllt sein können.

Das externe Spannglied 3 erstreckt sich über einen Teilbereich der Spannbetonbrücke 1 längs deren Fahrbahn und ist zwischen Abstützbereichen 6 wie einem Endanker 4 und einem Spannanker 5 verspannt. Es versteht sich, dass das externe Spannglied 3 auch zwischen zwei beidseitig vorgesehenen Spannankern 5 vorgespannt werden kann. Dazwischen können - wie in der Figur 1 gezeigt, mehrere Umlenksättel 7, 8 vorgesehen sein, die das Spannglied 3 auf eine statisch vorteilhafte geschwungene Bahn zwischen den Abstützbereichen 6 umlenken. Hierdurch wird das Spannglied 3 in mehrere Spannabschnitte 9, 10, 11 aufgeteilt, die je nach einer infolge Querpressung des Spannglieds 3 an den Umlenksätteln 7, 8 auftretenden Reibung eine gegenüber der am Spannanker 5 eingebrachte Vorspannung abweichende Vorspannung aufweisen können.

Die Erfassung der Vorspannung des Spannglieds 3 beziehungsweise dessen Spannabschnitte 9, 10, 11 erfolgt mittels der Schwingungsaufnehmer 12, beispielsweise mit dem entsprechenden Spannabschnitt 9, 10, 11 verbundenen Beschleunigungssensoren, die jeweils zwischen Abstützbereichen des jeweiligen Spannabschnitts 9, 10, 11 angebracht werden oder stationär vormontiert sind. Die Vorspannung wird als mit dieser physikalisch gemäß zuvor genannter Gleichung verbundenen Eigenfrequenz ermittelt. Dabei werden nach Anregung des Spannglieds 3 vorzugsweise mittels die Spannbetonbrücke 1 querenden Transferverkehrs die Eigenfrequenzen der verschiedenen Spannabschnitte 9, 10, 11 erfasst und in einem erfindungsgemäßen Verfahren zur Überwachung der Spannelemente 2 bearbeitet.

Figur 2 zeigt unter Bezugnahme auf die Bezugszeichen der Figur 1 ein Ausführungsbeispiel eines Ablaufs 13 zur Durchführung des Verfahrens zur Überwachung der Spannelemente 2 in Form des Spannglieds 3 beziehungsweise dessen Spannabschnitte 9, 10, 11 anhand eines beispielsweise während einer Prüfung manuell durchgeführten Verfahrens. Dabei wird in Block 14 der zu prüfende Spannabschnitt 9, 10, 11 identifiziert.

Hierzu kann beispielsweise ein Barcode-Leser einen am Spannabschnitt 9, 10, 11 angebrachten Barcode in ein Datenverarbeitungsgerät, beispielsweise ein Handgerät mit einem Prozessor und einem Speicher wie Computer, einlesen und die dort gespeicherten Daten früherer Überprüfungen zuordnen.

In Block 15 wird ein Schwingungsaufnehmer 12 - soweit dieser nicht bereits stationär aufgenommen ist - zwischen den Abstützbereichen 6 beziehungsweise den Umlenksätteln 7, 8 an dem identifizierten Spannabschnitt beispielsweise mittels eines Spanngurts angebracht.

In Block 16 wird die Messung gestartet, wobei die Anregung mittels eines Hammers oder vorteilhafterweise mittels des den identifizierten Spannabschnitt 9, 10, 11 in Schwingung versetzenden Transferverkehrs erfolgt. Die vom Schwingungsaufnehmer 12 erfassten Daten in Form von Schwingungsgrößen werden drahtlos oder per Kabel in das Datenverarbeitungsgerät eingelesen und gegebenenfalls gespeichert.

Block 17 führt die Bewertung der eingelesenen Daten vor. Da infolge der Ummantelung des Spannelements 2, deren Länge und Masse keine eindeutige Anwendung der oben aufgeführten Schwingungsformel bezüglich der Vorspannung und Eigenfrequenz getroffen werden kann, werden vor der ersten Überprüfung von jedem einzelnen Spannabschnitt 9, 10, 11 Schwingungsdaten im Neuzustand oder in einem Zustand vor Beginn der Überwachungen aufgenommen und normiert. Die gewonnenen Schwingungsdaten werden mit den normierten Schwingungsdaten im Neuzustand verglichen. Dabei kann den dem Vergleich resultierenden Abweichungen ein Toleranzband unterlegt werden, das die zeitliche Normentwicklung der Spannabschnitte ohne Schädigung berücksichtigt und einen Schädigungszustand dann ermittelt, wenn die Abweichungen dieses Toleranzband überschreiten.

In Block 18 werden die eingelesenen Schwingungswerte, das nach Vergleich bewertete Ergebnis der Vorspannung und/oder andere die Messung betreffende ermittelte beziehungsweise erfasste oder bewertete Größen an einem Display dargestellt und/oder auf einem Speicher dokumentiert.

In Block 19 können die Daten zur weiteren Bearbeitung, Bewertung, Dokumentation, Archivierung und dergleichen auf einen Zentralrechner übertragen werden.

Alternativ zum Ablauf 13, bei dem zumindest eine Person die Prüfung durchführen muss, kann ein vollautomatisierter Ablauf in der Weise durchgeführt werden, dass an jedem zu messenden Spannabschnitt 9, 10, 11 ein Schwingungsaufnehmer 12 stationär angeordnet ist, der über Kabel oder drahtlos, beispielsweise über WLAN, bei vorhandenem Verkehr Schwingungsdaten an ein an der Spannbetonbrücke angeordnetes Datenverarbeitungsgerät überträgt. Dieses Datenverarbeitungsgerät sammelt die Schwingungsdaten aller zu messenden Spannabschnitte 9, 10, 11, kann vor Ort durchzuführende Routinen einleiten und durchführen, beispielsweise eine Vorbewertung über den Erfolg der Messungen durchführen und/oder den adaptierbaren Zeitablauf der Messungen beispielsweise abhängig vom über die Spannbetonbrücke fließenden Transferverkehr steuern. Das Datenverarbeitungsgerät überträgt die gesammelten Daten in ausgewählten oder vorgegebenen Zeitabständen an einen Zentralrechner beispielsweise in einer Leitwarte für mehrere Brücken oder dergleichen vorzugsweise drahtlos, beispielsweise über Satellitenleitungen und/oder ein Mobilfunknetz.

Figur 3 zeigt ein Diagramm 20 der Eigenfrequenzen $f_k$ verschiedener, den Spannabschnitten 9, 10, 11 ähnlichen Spannabschnitte eines externen Spannglieds über die Zeit t. Dabei zeigt die Kurve 21 die Entwicklung der Eigenfrequenz $f_k$ eines intakten Spannabschnitts. Die Kurve 24 zeigt den zeitlichen Verlauf eines Spannabschnitts, bei dem beispielsweise ein(e) von sechzehn Drähten oder Litzen gebrochen ist. Die Kurven 22, 23 zeigen die Entwicklung der Eigenfrequenzen über die Zeit an den zu dem Spannabschnitt der Kurve 24 benachbarten Spannabschnitten. Die verminderte Abnahme der Vorspannung beziehungsweise der daraus resultierenden Eigenfrequenz ist auf einen Abfall der Vorspannung an den zwischen den einzelnen Spannabschnitten angeordneten Umlenksätteln zurückzuführen. Dieser hängt von der Querpressung und dem umgelenkten Radius des Spannelements ab und kann auch lediglich marginal sein. Die Kurven 25, 26 schließen ein beispielsweise empirisch ermitteltes, sich über die Zeit einstellendes Toleranzband ungestörter und unbeschädigter Spannabschnitte ein.

Im Neuzustand des Spannelements wie Spannglieds zum Zeitpunkt $t_0$ wird die Eigenfrequenz $f_k$ der Spannabschnitte auf die normierte Eigenfrequenz $f_{kn}$ normiert. Infolge nachlassender Vorspannung sinkt die Eigenfrequenz über die Zeit t. Zu den Zeitpunkten $t_1$, $t_2$, $t_3$, $t_4$, die jeweils über Zeiträume von Monaten oder Jahren auseinander liegen können, findet jeweils eine Messung der Eigenfrequenz $f_k$ statt. Zu Beginn, beispielsweise an den Zeitpunkten $t_1$, $t_2$ nimmt die Eigenfrequenz aufgrund stattfindender Materialeffekte wie Ermüdung, Eingrabungen der Spannelemente in die Ummantelung und dergleichen ab.

Zwischen Zeitpunkt $t_2$ und Zeitpunkt $t_3$ ist ein Bruch eines Drahtes des Spannabschnittes mit der Kurve 24 dargestellt. Durch die verringerte Vorspannung des durch den Bruch eines Drahts geschwächten Spannabschnitts wird zum Zeitpunkt $t_3$ eine verringerte Eigenfrequenz ermittelt, die außerhalb des durch die Kurven 25, 26 gebildeten Toleranzbandes liegt. Durch diese Messung wird ein Schädigungszustand des betroffenen Spannabschnitts erkannt und weitere Maßnahmen zur Reparatur oder Auswechslung des Spannglieds können getroffen werden.

Im Weiteren wird abhängig von der Reibung des externen Spannglieds an den Umlenksätteln die Verringerung der Vorspannung auch an den benachbarten Spannabschnitten mit den Kurven 23, 22 jeweils abgeschwächt bemerkbar, wobei die Vorspannung an dem weitesten entfernten Spannabschnitt mit der Kurve 21 infolge der dazwischen liegenden Anzahl an Reibflächen an den Umlenkstellen wie Umlenksätteln nicht mehr feststellbar ist. Auf diese Weise kann die Stelle des Drahtbruches auf den entsprechenden Spannungsabschnitt eingegrenzt werden. Bei der zum Zeitpunkt $t_4$ stattfindenden Messung stabilisieren sich die zum Zeitpunkt $t_3$ ermittelten Eigenfrequenzen.

## Bezugszeichenliste

| 1 | Spannbetonbrücke |
|----|----|
| 2 | Spannelement |
| 3 | Spannglied |
| 4 | Endanker |
| 5 | Spannanker |
| 6 | Abstützbereich |
| 7 | Umlenksattel |
| 8 | Umlenksattel |
| 9 | Spannabschnitt |
| 10 | Spannabschnitt |
| 11 | Spannabschnitt |
| 12 | Schwingungsaufnehmer |
| 13 | Ablauf |
| 14 | Block |
| 15 | Block |
| 16 | Block |
| 17 | Block |
| 18 | Block |
| 19 | Block |
| 20 | Diagramm |
| 21 | Kurve |
| 22 | Kurve |
| 23 | Kurve |
| 24 | Kurve |
| 25 | Kurve |
| 26 | Kurve |
| $f_k$ | Eigenfrequenz |
| $f_{kn}$ | normierte Eigenfrequenz |
| t | Zeit |
| $t_0$ | Zeitpunkt |
| $t_1$ | Zeitpunkt |
| $t_2$ | Zeitpunkt |
| $t_3$ | Zeitpunkt |
| $t_4$ | Zeitpunkt |

## Patentansprüche

1. Verfahren zur Überwachung von ummantelten, außerhalb eines Betonquerschnitts entlang einer Fahrbahn einer Spannbetonbrücke (1) angeordneten Spannelementen (2) mit mehreren, zwischen jeweils zwei Abstützbereichen (6, 7, 8) angeordneten Spannabschnitten (9, 10, 11) durch Erfassen einer auf eine Anregung eines Spannelements (2) folgenden Eigenfrequenz ($f_k$) mittels eines zwischen zwei Abstützbereichen (6) des Spannelements (2) angeordneten Schwingungsaufnehmers (12) und Ermitteln der Eigenfrequenz ($f_k$) mittels einer FFT-Analyse, **dadurch gekennzeichnet, dass** die Eigenfrequenzen ($f_k$) mehrerer Spannabschnitte (9, 10, 11) erfasst und ausgewertet, indem die Eigenfrequenzen ($f_k$) als relative Größen ermittelt, auf normierte Eigenfrequenzen ($f_{kn}$) zu einem ersten Zeitpunkt ($t_0$) eines einwandfreien Zustands des Spannelements (2) normiert werden und auf einen Schädigungszustand eines Spannelements (2) erkannt wird, wenn ein Vergleich der normierten Eigenfrequenzen ($f_{kn}$) des ersten Zeitpunktes ($t_0$) mit einer zu einem nachfolgenden Zeitpunkt ($t_1$, $t_2$, $t_3$) ermittelten Eigenfrequenzen ($f_k$) ein vorgegebenes Maß überschreiten.

2. Verfahren nach Anspruch 1, **dadurch gekennzeichnet, dass** aus mehreren zeitlich aufeinander folgenden Eigenfrequenzen ($f_k$) der Spannabschnitte (9, 10, 11) eine Historie eines diskreten Spannelements (2) erfasst wird.

3. Verfahren nach einem der Ansprüche 1 oder 2, **dadurch gekennzeichnet, dass** eine zeitliche Entwicklung einer Eigenfrequenz ($f_k$) mit empirisch oder modellgestützt ermittelten Werten verglichen wird und ein Schädigungszustand abhängig von einer Abweichung von diesen Werten ermittelt wird.

4. Verfahren nach einem der Ansprüche 1 bis 3, **dadurch gekennzeichnet, dass** auf einen Schädigungszustand erkannt wird, wenn die Eigenfrequenzen ($f_k$) mehrerer Spannabschnitte (9, 10, 11) eines Spannelements (2) ein vorgegebenes Maß überschreiten.

5. Verfahren nach einem der Ansprüche 1 bis 4, **dadurch gekennzeichnet, dass** jeder Spannabschnitt (9, 10, 11) des Spannelements (2) einzeln identifiziert und dessen normierte Eigenfrequenz ($f_{kn}$) und/oder danach ermittelte Eigenfrequenz ($f_k$) abgespeichert wird.

6. Verfahren nach einem der Ansprüche 1 bis 5, **dadurch gekennzeichnet, dass** die Eigenfrequenz ($f_k$) abhängig von einer mittels eines Transferverkehrs über die Spannbetonbrücke (1) verursachten Anregung der Spannelemente (2) ermittelt wird.

7. Verfahren nach einem der Ansprüche 1 bis 6, **dadurch gekennzeichnet, dass** an mehreren Spannelementen (2) beziehungsweise deren Spannabschnitten (9, 10, 11) jeweils ein Schwingungsaufnehmer (12) fest angeordnet ist und erfasste Eigenfrequenzen ($f_k$) auf eine zentrale Auswerteeinheit übertragen werden.

**8.** Vorrichtung zur Überwachung von ummantelten, außerhalb eines Betonquerschnitts entlang einer Fahrbahn einer Spannbetonbrücke (1) angeordneten Spannelementen (2), umfassend:

> - einen zwischen zwei Abstützbereichen (6) des Spannelements (2) anordenbaren Schwingungsaufnehmer (12) zur Erfassung von Daten in Form von Schwingungsgrößen;
> - drahtlos oder über Kabel übertragende Mittel zur Übertragung der erfassten Daten an ein Datenverarbeitungsgerät;
> - das Datenverarbeitungsgerät, das dazu eingerichtet ist, die vom Shwingungsaufnehmer (12) erfassten Daten gemäß dem Verfahren nach einem der Ansprüche 1 bis 7 zu verarbeiten.

**Claims**

**1.** Method for monitoring coated tensioning elements (2) arranged outside a concrete cross-section along a lane of prestressed concrete bridge (1) with a plurality of tensioning sections (9, 10, 11) arranged between two support areas (6, 7, 8,) by detecting a natural frequency ($f_k$) following the excitation of a tensioning element (2) by means of a vibration monitor (12) arranged between two support areas (6) of the tensioning element (2) and determining the natural frequency ($f_k$) by means of an FFT analysis, **characterised in that** the natural frequencies ($f_k$) of a plurality of tensioning sections (9, 10, 11) is detected and evaluated, **in that** the natural frequencies ($f_k$) are determined as relative parameters, standardised to standard natural frequencies ($f_{kn}$) at a first time point ($t_0$) of a perfect state of the tensioning element (2) and a damaged state of a tensioning element (2) is detected when a comparison of the standardised natural frequencies ($f_{kn}$) of the first time point ($t_0$) with a natural frequency ($f_k$) determined at a following time point ($t_1$, $t_2$, $t_3$) exceeds a predefined level.

**2.** Method according to claim 1, **characterised in that** a history of a discrete tensioning element (2) is determined from a plurality of chronologically consecutive natural frequencies ($f_k$) of the tensioning sections (9, 10, 11).

**3.** Method according to any of claims 1 or 2, **characterised in that** a temporal development of a natural frequency ($f_k$) is compared with empirically or model-based values and a damaged state is detected in case of a deviation from said values

**4.** Method according to any of claims 1 to 3, **characterised in that** a damaged state is detected when the natural frequencies ($f_k$) of a plurality of tension sections (9, 10, 11) of a tensioning element (2) exceed a predefined level.

**5.** Method according to any of claims 1 to 4, **characterised in that** each tensioning section (9, 10, 11) of the tensioning element (2) is identified individually and its standardised natural frequency ($f_{kn}$) and/or then determined natural frequency ($f_k$) is saved.

**6.** Method according to any of claims 1 to 5, **characterised in that** the natural frequency ($f_k$) is determined as a function of an excitation of the tensioning elements (2) caused by means of transfer traffic over the prestressed concrete bridge (1).

**7.** Method according to any of claims 1 to 6, **characterised in that** on a plurality of tensioning elements (2) or their tensioning sections (9, 10, 11) respectively a vibration monitor (12) is arranged securely and detected natural frequencies ($f_k$) are transmitted to a central evaluation unit.

**8.** Device for monitoring coated tensioning elements (2) arranged outside a concrete cross-section along a lane of a prestressed concrete bridge (1), comprising:

> - a vibration monitor (12) arrangeable between two support areas (6) of the tensioning element (2) for detecting data in the form of vibration parameters;
> - means transmitting wirelessly or via cable for sending the detected data to a data processing device;
> - the data processing device, which is set up to process the data detected by the vibration monitor (12) according to the method of any of claims 1 to 7

**Revendications**

**1.** Procédé de surveillance d'éléments tendeurs (2) enrobés, agencés en dehors d'une section de béton le long d'une chaussée d'un pont en béton précontraint (1), comportant plusieurs tronçons de tension (9, 10, 11) agencés entre deux zones de soutien (6, 7, 8) respectives, par la saisie d'une fréquence de résonance ($f_k$) suivant une excitation d'un élément tendeur (2) au moyen d'un capteur d'oscillations (12) agencé entre deux zones de soutien (6) de l'élément tendeur (2) et par la détermination de la fréquence de résonance ($f_k$) au moyen d'une analyse FFT, **caractérisé en ce que** les fréquences de résonance ($f_k$) de plusieurs tronçons de tension (9, 10, 11) sont saisies et évaluées en déterminant les fréquences de résonance ($f_k$) en tant que grandeurs relatives, normalisées sur des fréquences de résonance ($f_{kn}$) à un premier moment ($t_0$) d'un état parfait de l'élément tendeur (2) et sur la base d'un état d'endommagement d'un élément tendeur (2), il est détecté si une comparaison des fréquences de résonance ($f_{kn}$) normalisées du premier moment ($t_0$) avec une fréquence de résonance ($f_k$) déterminée à un moment ($t_1$, $t_2$, $t_3$) suivant dépasse une mesure prédéterminée.

2. Procédé selon la revendication 1, **caractérisé en ce qu'**à partir de plusieurs fréquences de résonance ($f_k$) des tronçons de tension (9, 10, 11), qui se succèdent, est saisie une histoire d'un élément tendeur (2) discret.

3. Procédé selon l'une des revendications 1 ou 2, **caractérisé en ce qu'**une évolution temporelle d'une fréquence de résonance ($f_k$) est comparée avec des valeurs obtenues empiriquement ou à partir de modèles et un état d'endommagement est déterminé en fonction d'un écart de ces valeurs.

4. Procédé selon l'une des revendications 1 à 3, **caractérisé en ce que** sur la base d'un état d'endommagement, il est détecté si les fréquences de résonance ($f_k$) de plusieurs tronçons de tension (9, 10, 11) d'un élément tendeur (2) dépassent une mesure prédéterminée.

5. Procédé selon l'une des revendications 1 à 4, **caractérisé en ce que** chaque tronçon de tension (9, 10, 11) de l'élément tendeur (2) est identifié individuellement et sa fréquence de résonance normalisée ($f_{kn}$) et/ou sa fréquence de résonance ($f_k$) ensuite déterminée est mémorisée.

6. Procédé selon l'une des revendications 1 à 5, **caractérisé en ce que** la fréquence de résonance ($f_k$) est déterminée indépendamment d'une excitation des éléments tendeurs (2) causée au moyen d'un trafic de transfert via le pont en béton précontraint (1).

7. Procédé selon l'une des revendications 1 à 6, **caractérisé en ce que** sur chacun de plusieurs éléments tendeurs (2) et/ou sur leurs tronçons de tension (9, 10, 11), un capteur d'oscillations (12) respectif est agencé de manière fixe et des fréquences de résonance ($f_k$) saisies sont transmises à une unité d'évaluation centrale.

8. Dispositif de surveillance d'éléments tendeurs (2) enrobés, agencés en dehors d'une section de béton le long d'une chaussée d'un pont en béton précontraint (1), comprenant :

   - un capteur d'oscillations (12) qui peut être agencé entre deux zones de soutien (6) de l'élément tendeur (2) pour saisir des données sous forme d'\*amplitudes d'oscillations ;
- des moyens de transmission sans fil ou par câble pour transmettre les données saisies à un appareil de traitement de données ;
- l'appareil de traitement de données qui est configuré pour traiter les données saisies par le capteur d'oscillations (12) selon le procédé selon l'une des revendications 1 à 7.

**Figur 1**

**Figur 2**

**Figur 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4118897 A1
- DE 202005017463 U1
- DE 4408043 A1
- DE 10102577 C1
- DE 19531858 A1
- KR 100373517 B1